# EUROPEAN PATENT APPLICATION

(11) **EP 2 733 278 A1**
(43) Date of publication of application: **21.05.2014**
(21) Application number: 12814199.1
(22) Date of filing: 04.07.2012
(51) Int. Cl.: E04D 13/18, F24J 2/04

(54) **SOLAR THERMAL COLLECTOR/ROOF FOR BUILDINGS AND THE LIKE**

(30) Priority: 14.07.2011 ES 201130758
(71) Applicant: Soltech Energy Mediterraneo, S.L., 29640 Fuengirola (Málaga) (ES)
(72) Inventor: TELANDER, Andreas Christofer, 29640 Fuengirola (Málaga) (ES)
(74) Representative: Carvajal y Urquijo, Isabel
(86) International application number: PCT/ES2012/000186
(87) International publication number: WO 2013/011163

(57) **Abstract**

The invention relates to a modular roof for buildings which, in addition to serving as a roof, acts as a solar thermal collector that is very well integrated into the architecture, said roof combining two functional elements into a single element with the resulting savings not only in terms of energy but also construction materials. For this purpose, the invention is formed by a high-density insulating panel, the dimensions of which match the intended size of the module. A series of parallel strips are provided on the aforementioned panel, which are made from the same or a similar material as the panel, said strips being spaced apart to allow for the positioning of respective tubes that correspond to a hydraulic circuit. The ends of the tubes terminate at the respective collectors and are associated with a solar absorber, which is screwed to intermediate plates. In addition, batons are located on the aforementioned absorber and transparent roof tiles are affixed to said batons using clips positioned so as to correspond to the valleys of the tiles.

## Description

### Object of the invention

The present invention refers to a roof, specifically to a modular roof for buildings and the like, which, in addition to serving as a roof, serves as a solar thermal collector, by using transparent glass tiles, beneath which a solar energy collector is located.

The invention aims to achieve a high level of architectural integration, furthermore combining two functional elements into one single element, thus resulting in savings in terms of both energy and construction materials.

The fact that, in addition to being modular, it is possible to walk on said collector/roof, both during and after its installation, also forms an object of the present invention, thereby making the mounting thereof quick, safe and simple, and facilitating subsequent maintenance and/or repair work.

### Background of the invention

The quest to derive benefit from renewable energy sources has led to solar panels being installed on the roofs of buildings, in such a way that the latter are completely or partially self-sufficient from an energy point of view.

Although various structural and functional solutions exist for said solar panels, they all share the common denominator of having built-in supports, via which they are fixed to the roof, in such a way that said panels exclusively fulfil an energy collecting function but lack a roof function per se. What is more, on many occasions, the means used to fasten the panels to the roof give rise to seal problems therein.

Consequently, the additional cost of the solar panels and the installation thereof must be added to that of a conventional roof, in addition to those of maintaining the roof seal.

As can be deduced from the above, the visible elements in the building's roof are solar panels, in such a way that it is fairly complicated to integrate said panels into the rest of the building in an aesthetically or architecturally pleasing manner. On many occasions, this gives rise to an appearance leaving much to be desired.

In the background literature, transparent tiles, for example made of glass, are combined with solar collectors. However, the solutions known about do not generate one single, compact element across which it is possible to walk, rather constituting broken up systems, wherein the various elements that form the same are assembled on a roof.

### Description of the invention

The collector/roof for buildings proposed by the invention resolves the various aspects of the problem set out above in a fully satisfactory way.

Said solar collector/roof therefore, more specifically, adopts a modular structure, formed by an undetermined number of modules that may be coupled to one another, with a tight seal along both the length and width, in each one of which there is a high-density insulating panel, the dimensions of which correspond to the intended size of the module. Multiple transversal plates, distributed uniformly, are fixed to the upper part of the panel using screws, these plates being complemented by multiple small sheets located on the lower face of said insulating panel, located in such a way that they correspond to each one of the fastening screws and act by way of washers, which enable the screws to grip the right amount without creating undesired deformations in the insulation panel, although said panel may also be structured like a sandwich, with a central core and primarily made of insulating material, both upper and lower layers being made of metal.

A series of strips arranged in parallel are situated on said plates, made of the same or a similar material to that of the insulating panel, these strips being spaced apart in order for respective tubes corresponding to the hydraulic collector circuit to be placed between them, said tubes ending in respective collectors, all linked to a solar absorber located on said transversal strips and likewise fastened to the intermediate plates by means of screws.

Batons are located on said absorber, to which the transparent roof tiles are fastened, along with clips located in such a way that they correspond with the valleys of the tiles.

In order to ensure that the insulating effect of the collector/roof is continuous, the edges of the insulating panels are intended to be staggered, in order to facilitate male-female coupling between modules, which prevents fissures or grooves through which thermal bridges may appear.

Said batons consist of ribbed metal sections that are likewise fastened to the metal plates of the collector/roof using the same fastening screws as those used for the solar absorber.

### Description of the drawings

In order to complement the current description and with the aim of facilitating a better understanding of the invention's characteristics, below is a set of drawings, which forms an integral part thereof and provides a preferred, non-limiting example of a practical embodiment of the same, wherein:

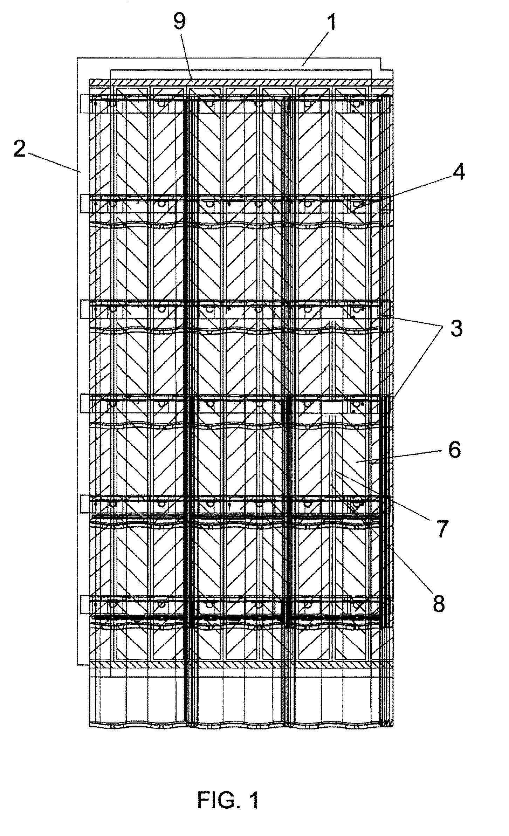

Figure 1 is an overall plan view of a solar collector/roof for buildings, according to the object of the present invention.

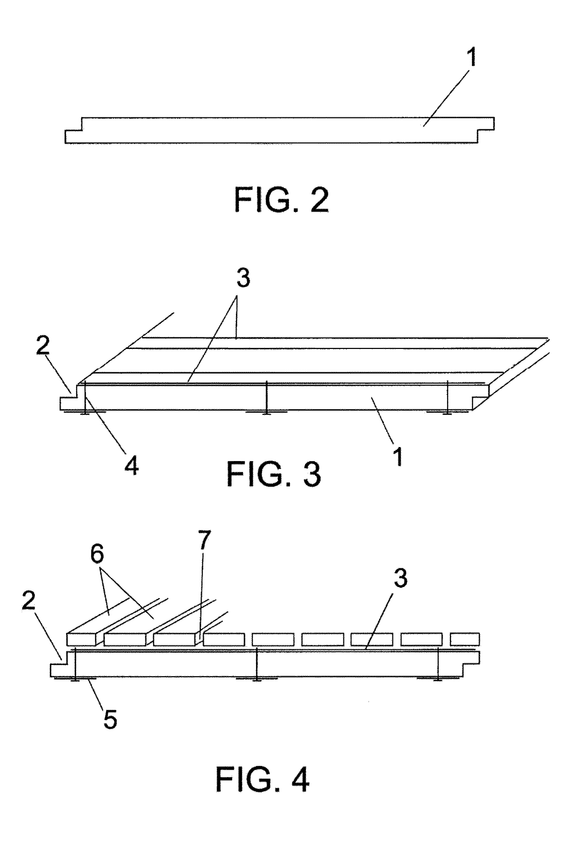

Figure 2 is a profile view of the insulation panel, the dimensions of which coincide with the module.
Figure 3 is a partial perspective view of the insulation panel shown in the previous figure, alongside the transversal plates and the fastening lids for said panel with the corresponding screws thereof.
Figure 4 provides a similar view to that shown in Figure 3, wherein the insulating strips perpendicular to the plates shown in the previous figure have been incorporated.
Figure 5 is a detailed cross-section of the assembly represented in the previous figure, into which the hydraulic circuit tubes have been incorporated, with their corresponding collectors and the solar absorber.
Figure 6 provides a similar representation to that shown in Figure 5, wherein the batons have also been incorporated.
Figure 7 once again provides a similar representation to that shown in Figures 5 and 6, wherein the collector/roof is however complete, i.e. wherein the transparent tiles have been added.

### Preferred embodiment of the invention

In view of the figures described above, it is possible to observe how the solar collector/roof proposed by the invention is formed by an insulating panel (1), the dimensions of which correspond to the intended modularity of the roof, this panel being high density, for example made from a polyurethane derivative, with male-female coupling means (2) on its edges, which ensure perfect continuity in the coplanar coupling between panels or modules, both lengthways and cross-wise, in order to prevent the potential existence of thermal bridges.

The upper face of the panel (1) may optionally bear a rigidity-providing structure made from multiple parallel plates (3), which are fastened to the panel (1) using screws (4), passing from the lower face of the latter, wherein small sheets (5) crossed by said screws (4) are located, thus acting as large supporting washers on the panel (1).

A simpler, equivalent solution would be for the insulating panel to be configured as a sandwich, wherein there is a central core made of high density insulation material, to which upper and lower steel sheets are stuck during the manufacturing process, upon which the remaining elements needed, which also form part of the roof, are screwed.

In either of the two cases, multiple strips (6) of insulating material (6) are located on this assembly, these being perpendicular to the plates (3), i.e. running longitudinally and having spaces (7) between them, wherein the tubes (8) pertaining to the hydraulic circuit are located, these extending between a pair of end collectors (9), the solar absorber (10) being located on top of this assembly, the dimensions of which correspond to the panel (1).

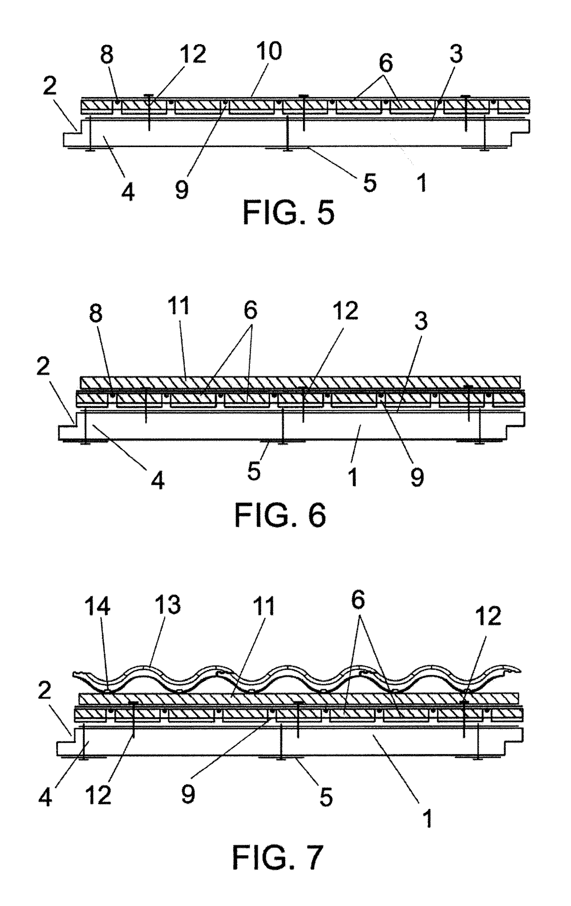

The structure described is complemented by a series of transversal batons (1), which, using another set of screws (12), are fixed to the metal plates (3), simultaneously fastening to the absorber (10) and the insulating strips (6), as can be observed with particular clarity in Figure 6.

Finally, the transparent tiles (13) are duly fixed to the batons (11), upon which they are supported (11), and to which they are fixed by means of clips (14), to which end said batons (11) have a ribbed shape, receiving the screws (12) via one of their branches, specifically via the lower branch thereof, whilst the clips (14) for fastening the tiles (13) are received via the upper branch thereof.

To conclude, it must be noted that said tiles (13) are assisted by a sealing band placed between them, in order to prevent energy loss, either by means of convention or as a result of the wind, thus making the seal around the system tighter and keeping the inside of the module clean.

## Claims

1. Solar thermal collector/roof for buildings and the like, which, adopting a modular and repetitive structure, is **characterised in that** it is formed by a high density insulating panel, the dimensions of which correspond to the intended size of the module, a series of strips parallel to the same being situated thereon, made of the same or a similar material as the insulating panel, these strips having a space between them in order to facilitate the location of respective tubes corresponding to a hydraulic circuit, the ends of which terminate in the respective collectors, linked to a solar absorber, which is also fastened to the intermediate plates by means of screws, batons being located on said absorber, to which the transparent roof tiles are fastened, using clips located in such a way that they correspond with the valleys of the tiles.

2. Thermal solar collector/roof for buildings and similar, according to claim 1, **characterised in that** multiple crosswise plates are fastened to the insulating panel between the same and the longitudinal insulating strips, these crosswise plates being uniformly distributed and located on the upper face of said panel, whilst small sheets are located on the lower face of the same which correspond to the corresponding fastening screws.

3. Thermal solar collector/roof for buildings and similar, according to claim 1, **characterised in that** the insulating panel is formed by a sandwich-type panel, wherein a central, high-density insulating core is established, to which are affixed upper and lower steel layers.

4. Thermal solar collector/roof for buildings and similar according to claim 1, **characterised in that** the edges of the insulating panel are duly configured for male-female coupling between modules, i.e. with the panels that surround it.

5. Thermal solar collector/roof for buildings and similar, according to claim 1, **characterised in that** the batons consist of ribbed metal sections, which are open at the sides and fixed to the metal plates using the same fixing screws as those used for the solar absorber.

6. Thermal solar collector/roof for buildings and similar, according to claim 1, **characterised in that** the clips or fastening staples used to fasten the tiles are located in such a way that they correspond to the lowest end of the same and act on the upper branch of the batons.

7. Thermal solar collector/roof for buildings and similar, according to claim 1, **characterised in that** the tiles are coupled together in a seal-tight way by means of sealing strips.
